# EUROPÄISCHE PATENTANMELDUNG

(11) **EP 2 711 665 A1**
(43) Veröffentlichungstag der Anmeldung: **26.03.2014**
(21) Anmeldenummer: 13174033.4
(22) Anmeldetag: 27.06.2013
(51) Int. Cl.: G01B 21/04, G01B 5/012, H04B 1/74

(54) **Tastsystem und Verfahren zum Betrieb eines Tastsystems**

(30) Priorität: 20.09.2012 DE 102012216886
(71) Anmelder: Dr. Johannes Heidenhain GmbH, 83301 Traunreut (DE)
(72) Erfinder: Joachimsthaler, Ingo, 83278 Traunstein (DE); Gröll, Klaus, 83329 Waging am See (DE); Eisenberger, Christian, 83324 Ruhpolding (DE)

(57) **Zusammenfassung**

Die Erfindung betrifft ein Tastsystem, welches einen Tastkopf (1) und ein Sende-Empfängerelement (2) umfasst. Der der Tastkopf (1) und das Sende-Empfängerelement (2) weisen jeweils eine Sendeeinheit (S1, S1'; S2) und jeweils eine Empfängereinheit (R1, R1'; R2) auf, so dass zwischen diesen eine Information (Al, Bl) drahtlos übertragbar ist. Vom Tastkopf (1) ist die Information (Al, Bl) innerhalb eines Sendeblocks (E) sendbar. Dabei sind innerhalb des Sendeblocks (E) ein erstes Funksignal (T1I) mit einer ersten Frequenz (fI) und ein zweites Funksignal (T1II) mit einer von der ersten Frequenz (fI) unterschiedlichen zweiten Frequenz (fII) sendbar. Innerhalb des Sendeblocks (E) sind dagegen weder Funksignale mit der ersten Frequenz (fI) noch Funksignale mit der zweiten Frequenz (fII) durch die Empfängereinheit (R1, R1') des Tastkopfs (1) empfangbar. Ebenso umfasst die Erfindung auch ein Verfahren zum Betrieb eines Tastsystems. (Figur 1)

## Beschreibung

Die Erfindung betrifft ein Tastsystem, bestehend aus einem Tastkopf mit einem Taststift und einem Sende-Empfängerelement, wobei zwischen Tastkopf und dem Sende-Empfängerelement eine drahtlose Informationsübertragung möglich ist, gemäß dem Anspruch 1. Ferner betrifft die Erfindung ein Verfahren zum Betrieb eines derartigen Tastsystems gemäß dem Anspruch 9.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Signal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Funksignal umgewandelt, so dass auf diese Weise eine berührungs- und drahtlose Übertragung der Antastinformation an das Sende-Empfängerelement des Tastsystems erreicht wird. In diesem Sende-Empfängerelement werden dann die drahtlos übertragenen Signale wieder in elektrische Signale umgewandelt.

Das Sende-Empfängerelement des Tastsystems ist mit einer Auswerteeinheit verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden. In diesem Zusammenhang ist es wichtig, dass die entsprechende Information innerhalb eines vorbestimmten Zeitfensters sicher übertragen wird.

Mit einem derartigen Tastkopf kann also beispielsweise die Kontur eines Werkstücks aber auch die Kontur eines Werkzeugs abgetastet werden. Im Falle der Abtastung eines Werkstücks ist der Tastkopf meist beweglich relativ zum Sende-Empfängerelement angeordnet.

Aus der Offenlegungsschrift EP 2216761 A1 ist ein Tastsystem der eingangs genannten Art bekannt, bei dem eine drahtlose Signalübertragung bzw. Informationsübertragung über ein Funksignal nach den so genannten Frequency-Hopping-Verfahren offenbart ist.

Weiterhin ist in der DE 102010053911 A1 ein Übertragungssystem offenbart, bei dem nach erfolgloser Übertragung von Funksignalen einen Frequenzwechsel vorgenommen wird.

Der Erfindung liegt die Aufgabe zu Grunde, ein Tastsystem, bzw. ein Verfahren zum Betrieb eines Tastsystems zu schaffen, durch welches ein sicherer und einfacher Betrieb eines Tastsystems erreicht werden kann.

Diese Aufgabe wird erfindungsgemäß durch die Merkmale des Anspruchs 1 bzw. des Anspruchs 9 gelöst.

Demnach umfasst das Tastsystem einen Tastkopf und ein Sende-Empfängerelement. Der Tastkopf weist einen Taststift und ein Sensorelement auf. Durch Berührung des Taststifts ist vom Sensorelement ein Sensorsignal erzeugbar. Der Tastkopf und das Sende-Empfängerelement weisen jeweils zumindest eine Sendeeinheit und jeweils zumindest eine Empfängereinheit auf, so dass zwischen diesen eine Information drahtlos übertragbar ist. Weiterhin ist der Tastkopf derart konfiguriert, dass vom Tastkopf die Information mit Hilfe von Funksignalen innerhalb eines Sendeblocks redundant sendbar ist. Innerhalb des Sendeblocks sind zu diesem Zweck ein erstes Funksignal mit einer ersten Frequenz und ein zweites Funksignal mit einer von der ersten Frequenz unterschiedlichen zweiten Frequenz zur Übertragung ein und derselben Information sendbar. Dagegen sind innerhalb des Sendeblocks weder Funksignale mit der ersten Frequenz noch Funksignale mit der zweiten Frequenz durch die Empfängereinheit des Tastkopfs empfangbar. Insbesondere sind innerhalb des Sendeblocks durch die Empfängereinheit des Tastkopfs keinerlei Funksignale empfangbar. Der Tastkopf ist also während der Ausführung des Sendeblocks sozusagen taub.

Als Sendeblock kann also ein zusammenhängender Zeitraum verstanden werden, innerhalb welchem das erste und das zweite Funksignal abgesetzt werden. Die Sendeblöcke können sich insbesondere bei der Übertragung einer Bereitschaftsinformation in vergleichsweise großen zeitlichen Abständen wiederholen. Optional kann innerhalb des Sendeblocks zusätzlich noch ein drittes oder weiteres Funksignal mit einer dritten oder weiteren Frequenz abgesetzt werden.

Als Funksignale sind Signale zu verstehen, welche in Form von modulierten Funkwellen vorliegen. Das bevorzugte Frequenzband für Funkwellen liegt hier zwischen 100 MHz und 300 GHz. In vorteilhafter Ausgestaltung weist die Funkwelle eine Frequenz zwischen 500 MHz und 30 GHz auf. Insbesondere können die Funksignale als Datenrahmen bzw. Datenframes ausgestaltet sein gemäß der üblichen Nomenklatur im Zusammenhang mit dem OSISchichtenmodell.

Der Tastkopf und das Sende-Empfängerelement können insbesondere relativ zueinander bewegbar angeordnet sein.

In einer bevorzugten Ausgestaltung der Erfindung kann das Sensorelement als ein mechanisch wirkendes Element, etwa als ein Dehnmessstreifen oder als ein Piezoelement ausgestaltet sein oder als ein optisch wirkendes Element, beispielsweise als ein Fotoelement, in einer optischen Anordnung realisiert sein.

Mit Vorteil weist das Sende-Empfängerelement eine erste elektronische Empfängerschaltung und eine zweite elektronische Empfängerschaltung auf. Durch die erste elektronische Empfängerschaltung ist das erste Funksignal mit der ersten Frequenz empfangbar und durch die zweite elektronische Empfängerschaltung ist das zweite Funksignal mit der zweiten Frequenz empfangbar. Insbesondere für diese Ausgestaltung können mit Vorteil das erste Funksignal und das zweite Funksignal gleichzeitig empfangbar sein, insbesondere innerhalb eines Sendeblocks beziehungsweise während des Zeitraums, in dem der Tastkopf einen Sendeblock ausführt. Üblicherweise werden beide elektronischen Empfängerschaltungen in diesem Betriebszustand permanent horchen. Die gleichzeitige Empfangsbereitschaft kann aber auch hergestellt werden, indem die elektronischen Empfängerschaltungen jeweils wechselweise mit hoher Schaltfrequenz aktiviert und deaktiviert werden.

In weiterer Ausgestaltung der Erfindung weist die Sendeeinheit des Tastkopfs eine elektronische Sendeschaltung auf, die so konfiguriert ist, dass durch die Sendeschaltung sowohl das erste Funksignal mit der ersten Frequenz als auch das zweite Funksignal mit der zweiten Frequenz, insbesondere nacheinander, sendbar sind.

Die Sendeeinheit des Tastkopfs kann zwei elektronische Sendeschaltungen aufweisen, wobei durch die erste elektronische Sendeschaltung das erste Funksignal mit der ersten Frequenz und durch die zweite elektronische Sendeschaltung das zweite Funksignal mit der zweiten Frequenz, insbesondere gleichzeitig, sendbar sind. Unter gleichzeitig ist hier zu verstehen, dass zu einem Zeitpunkt sowohl das erste als auch das zweite Funksignal gesendet werden. Die Funksignale können bei dieser Ausgestaltung völlig synchron oder mit versetztem Beginn gesendet werden, jedenfalls mit zeitlicher Überlappung.

Weiterhin kann das Tastsystem zumindest eine elektronische Sendeschaltung und eine elektronischen Empfängerschaltung aufweisen, die in einem elektronischen Baustein, beispielsweise einem Chip, integriert sind.

Mit Vorteil ist die Information, die drahtlos über ein Funksignal übertragbar ist, eine Bereitschaftsinformation oder eine Antastinformation. Die Antastinformation gibt Auskunft darüber, ob der Taststift einen zu vermessenden Körper berührt. Sowohl das erste als auch das zweite Funksignal enthält dann die Antastinformation.

Für den Betrieb des Tastsystems ist keine Synchronisation des Sendebeginns eines Funksignals bzw. Datenrahmens (senderseitig) zu einem etwaigen Empfangsfenster (empfängerseitig) erforderlich. Demnach ist also zwischen dem Tastkopf und dem Sende-Empfängerelement eine Information drahtlos über ein Funksignal unsynchronisiert übertragbar. Insbesondere muss daher der Tastkopf und / oder das Sende-Empfängerelement keine Zeitmesseinrichtung aufweisen. Dies wird insbesondere dadurch erreicht, dass das erste sowie das zweite Funksignal gleichzeitig beziehungsweise parallel durch zumindest eine der Empfängereinheiten empfangbar sind.

Die Erfindung betrifft auch ein Verfahren zum Betrieb eines Tastsystems, bei dem zwischen dem Tastkopf und dem Sende-Empfängerelement eine Information über ein Funksignal drahtlos übertragen wird. Dabei weisen der Tastkopf und das Sende-Empfängerelement jeweils zumindest eine Sendeeinheit und jeweils zumindest eine Empfängereinheit auf, so dass zwischen diesen eine Information drahtlos übertragen wird. Vom Tastkopf wird dabei die Information innerhalb beziehungsweise während eines Sendeblocks gesendet. Innerhalb eines derartigen Sendeblocks werden zu diesem Zweck ein erstes Funksignal mit einer ersten Frequenz und ein zweites Funksignal mit einer von der ersten Frequenz unterschiedlichen zweiten Frequenz gesendet, jedoch sind innerhalb des Sendeblocks weder Funksignale mit der ersten Frequenz noch Funksignale mit der zweiten Frequenz durch die Empfängereinheit des Tastkopfs empfangbar.

Dadurch dass die Empfängereinheit gleichzeitig Funksignale beider Frequenzen empfangen kann, kann auf eine Synchronisation zwischen Sendeeinheit und der betreffenden Empfängereinheit verzichtet werden. In diesem Fall kann also die Information unsynchronisiert und damit auf einfache Weise übertragen werden.

Gemäß einer vorteilhaften Ausgestaltung des Verfahrens sind das erste Funksignal und das zweite Funksignal innerhalb eines Sendeblocks gleichzeitig von der Empfängereinheit des Sende-Empfängerelements empfangbar.

Mit Vorteil ist die Information als eine Bereitschaftsinformation oder als eine Antastinformation ausgestaltet und wird insbesondere vom Tastkopf zum Sende-Empfängerelement gesendet.

In weiterer Ausgestaltung des Verfahrens wird vom Tastkopf die Information innerhalb des Sendeblocks zunächst über das erste Funksignal mit der ersten Frequenz und danach über das zweite Funksignal mit der zweiten Frequenz gesendet. Nach dem Empfang des ersten und des zweiten Funksignals durch die Empfängereinheit des Sende-Empfängerelements sendet die Sendeeinheit des Sende-Empfängerelements ein Funksignal mit einer Acknowledge-Information mit der zweiten Frequenz. Danach kann die Sendeeinheit des Sende-Empfängerelements optional noch ein Funksignal mit der Acknowledge-Information mit der ersten Frequenz senden.

Das Verfahren bzw. das Tastsystem kann auch derart ausgestaltet sein, dass zunächst vom Tastkopf, wie bereits beschrieben, die Information innerhalb des Sendeblocks über das erste Funksignal mit der ersten Frequenz und danach über das zweite Funksignal mit der zweiten Frequenz gesendet wird. Nach dem Empfang des ersten oder des zweiten Funksignals durch die Empfängereinheit des Sende-Empfängerelements sendet die Sendeeinheit des Sende-Empfängerelements jedenfalls zwei Funksignale mit einer Acknowledge-Information jeweils mit der ersten und mit der zweiten Frequenz. Dies ist insbesondere dann vorteilhaft, wenn anfangs die Übertragung auf der ersten Frequenz problemlos verläuft, jedoch danach die Übertragung des Funksignals der gleichen Frequenz mit der Acknowledge-Information gestört würde. Dann würde das Funksignal mit der Acknowledge-Information über eine andere Frequenz übertragen als dasjenige Funksignal, welches das Acknowledgesignal auslöste.

In vorteilhafter Weise wird also die Antastinformation vom Tastkopf redundant innerhalb eines Sendeblocks über das erste und das zweite Funksignal gesendet.

Durch das erfindungsgemäße Tastsystem oder Verfahren soll insbesondere eine sichere Übertragung von vergleichsweise wenig Information innerhalb eines definierten Zeitraumes möglich sein. Insbesondere auch dann, wenn der Tastkopf seine Position gegenüber dem Sende-Empfängerelement laufend ändert. Die Sicherheit der Übertragung der Information kann weiter gesteigert werden, wenn zusätzlich Signale über Lichtwellen übertragen werden, so dass bei völliger Störung der Funksignale auch eine Übertragung der Information innerhalb des definierten Zeitraumes erfolgt.

Zudem kann durch die Erfindung die durchschnittliche Zeit reduziert werden, in der ein Maschinenstopp ausgelöst wird. Insbesondere ist diese Zeit kurz auch wenn eine Störung der Funkübertragung auftritt.

Vorteilhafte Ausbildungen der Erfindung entnimmt man den abhängigen Ansprüchen.

Weitere Einzelheiten und Vorteile des erfindungsgemäßen Tastsystems und des erfindungsgemäßen Verfahrens ergeben sich aus der nachfolgenden Beschreibung zweier Ausführungsbeispiele anhand der beiliegenden Figuren.

Es zeigen die
- Figur 1: ein Tastsystem in einer Seitenansicht,
- Figur 2: eine Detailansicht eines Tastkopfs mit einem Sensorelement,
- Figur 3: ein Prinzipschaltbild der Sende- und Empfängerbaugruppe des Tastkopfes und des Sende-Empfängerelements gemäß einem ersten Ausführungsbeispiel,
- Figur 4: ein Tastsystem in einer Seitenansicht in Antastposition,
- Figuren 5a - 5d: Zeitdiagramme der Signalübertragung für unterschiedliche Fallkonstellationen gemäß dem ersten Ausführungsbeispiel,
- Figur 6: ein Prinzipschaltbild der Sende- und Empfängerbaugruppe des Tastkopfes und des Sende-Empfängerelements gemäß einem zweiten Ausführungsbeispiel,
- Figur 7: ein Zeitdiagramm der Signalübertragung gemäß dem zweiten Ausführungsbeispiel,
- Figuren 8a, 8b: Zeitdiagramme der Signalübertragung für unterschiedliche Fallkonstellationen gemäß einem dritten Ausführungsbeispiel.

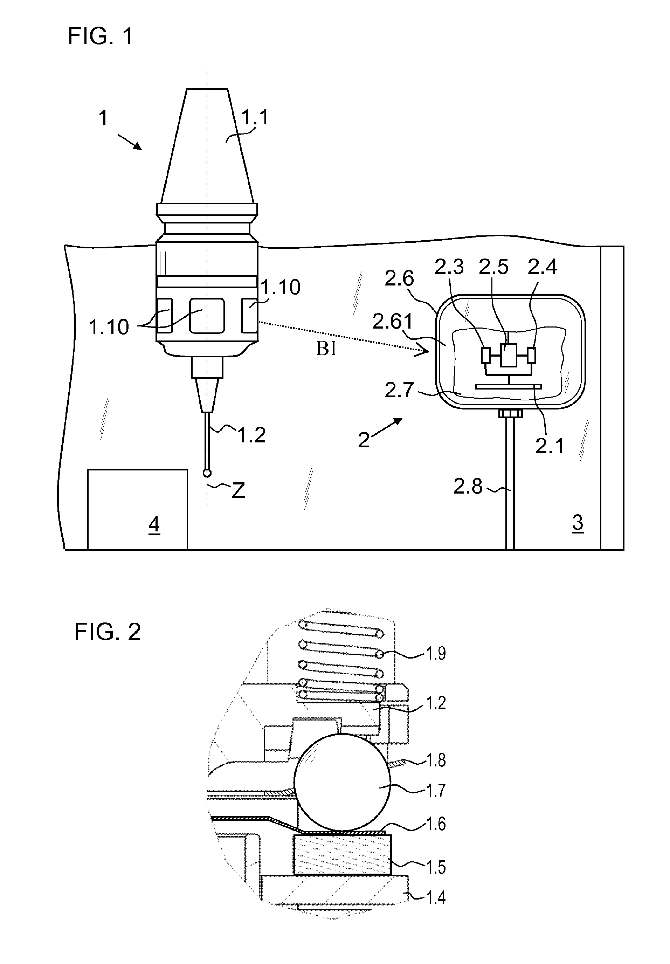

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse Z des Tastkopfs 1 stellt gleichzeitig die Mittelachse des Spannkonus 1.1 dar. Parallel und konzentrisch zur Längsachse Z ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

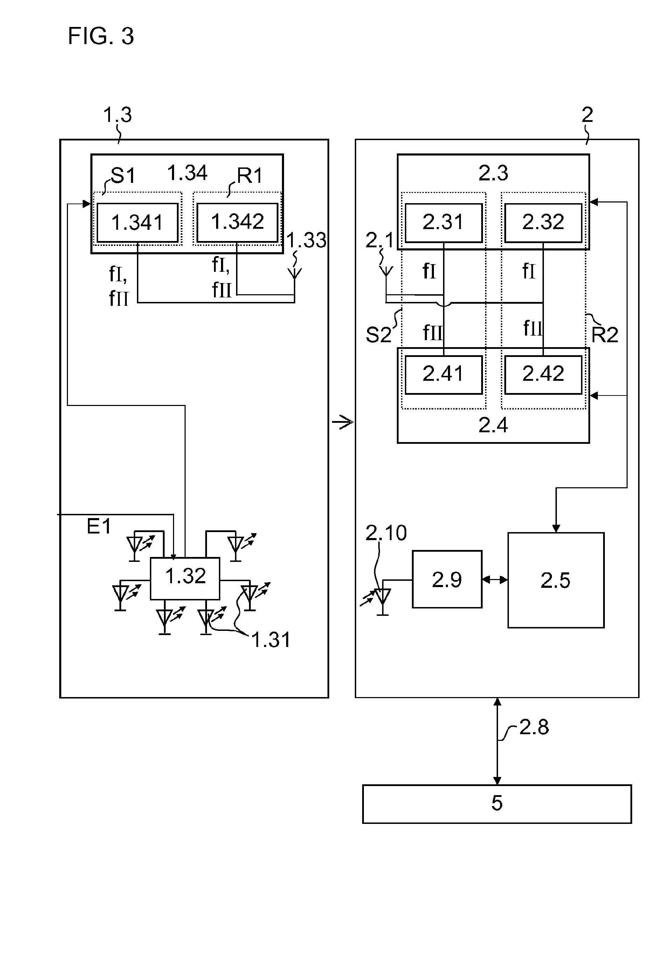

Ferner weist der Tastkopf 1 Fenster 1.10 auf, welche sowohl für Lichtwellen als auch für Funkwellen durchlässig ausgestaltet sind. Innerhalb des Tastkopfs 1 befindet sich gemäß der Figur 3 eine Sende- und Empfängerbaugruppe 1.3. Diese weist Lichtquellen 1.31 auf, die von der Batterie im Tastkopf 1 gespeist werden und über dem Umfang des Tastkopfs 1 versetzt angeordnet sind. Im gezeigten Beispiel sind gemäß der Figur 3 am Tastkopf 1 sechs Lichtquellen 1.31 vorgesehen, die jeweils um 60° versetzt entlang einer Umfangslinie am Tastkopf 1 angeordnet sind. Wie in der Figur 3 schematisch dargestellt, werden die Lichtquellen 1.31 von einer im Tastkopf 1 befindlichen CPU 1.32 angesteuert. Diese können hier Lichtwellen mit einer Wellenlänge von λ_{L} = 880 nm emittieren. Im Übrigen ist der Tastkopf 1 bezüglich Lichtwellen sensorlos ausgestaltet, so dass vom Tastkopf 1 keine Signale, die auf Lichtwellen beruhen, empfangbar sind. Folglich sind keine Acknowledge-Signale, welche auf Lichtwellen basieren, vom Sende-Empfängerelement 2 zum Tastkopf 1 übertragbar.

Weiterhin ist im Tastkopf 1 gemäß der Figur 3 ein Funktransceiver 1.34 angeordnet, der eine elektronische Senderschaltung 1.341 und eine elektronische Empfängerschaltung 1.342 umfasst. Der Funktransceiver 1.34 ist so ausgestaltet, dass dieser wahlweise Funksignale T1I, T1II mit einer ersten Frequenz fI, im vorgestellten Ausführungsbeispiel beträgt fI = 2,4 GHz oder mit einer zweiten Frequenz fII senden und empfangen kann, wobei hier fII = 2,485 GHz gewählt wurde. Die Einstellung, mit welcher der Frequenzen fI, fII gesendet oder empfangen werden kann, erfolgt durch Softwarebefehle in Verbindung mit der CPU 1.32.

Der Funktransceiver 1.34 ist als ein einzelner Chip ausgestaltet und mit einer Antenne 1.33 verbunden. Die Antenne 1.33 ist beispielsweise hinter den Fenstern 1.10 als umlaufender Draht im Tastkopf 1 untergebracht.

Funktionsmäßig beschrieben, weist der Tastkopf 1 eine Empfängereinheit R1 auf, welche die elektronische Empfängerschaltung 1.342 umfasst. Zudem weist der Tastkopf 1 eine Sendeeinheit S1 auf, welche die elektronischen Senderschaltungen 1.341 umfasst. Somit sind durch die eine Sendeeinheit S1 sowohl Funksignale T1I mit der ersten Frequenz fI als auch Funksignale T1II mit der zweiten Frequenz fII sendbar. Gleichermaßen sind durch die Empfängereinheit R1 sowohl Funksignale T1I mit der ersten Frequenz fI als auch Funksignale T1II mit der zweiten Frequenz fII empfangbar.

Das Sende-Empfängerelement 2 ist im vorgestellten Beispiel gemäß der Figur 1 an einem stationären Bauteil 3 der Werkzeugmaschine befestigt. Die Werkzeugmaschine 3 weist einen Bearbeitungsraum auf, der im Wesentlichen durch metallische Wände begrenzt ist. Das Sende-Empfängerelement 2 weist ein Gehäuse 2.6 auf, das ein für Lichtwellen als auch für Funkwellen durchlässiges Fenster 2.61 umfasst. Das Gehäuse 2.6 mit dem Fenster 2.61 ist hermetisch dicht ausgestaltet, so dass Kühl- oder Schmiermittel, die während einer Werkstückbearbeitung im Bearbeitungsraum verwendet werden, nicht in das Innere des Gehäuses 2.6 eindringen können.

Innerhalb eines Gehäuses 2.6 des Sende-Empfängerelements 2 befindet sich hinter dem Fenster 2.61 eine Leiterplatte 2.7, auf der ein optoelektronischer Empfänger 2.10 und ein erster Funktransceiver 2.3 sowie ein zweiter Funktransceiver 2.4 angeordnet sind (siehe Figur 3).

Die Funktransceiver 2.3, 2.4 des Sende-Empfängerelements 2 weisen jeweils eine elektronische Empfängerschaltung 2.32, 2.42 und eine elektronische Senderschaltung 2.31, 2.41 auf. Dabei ist der erste Funktransceiver 2.3 so konfiguriert, dass dieser Funksignale mit der ersten Frequenz fI senden und empfangen kann. Durch den zweiten Funktransceiver 2.4 sind dagegen Funksignale mit der zweiten Frequenz fII sendbar und empfangbar.

Die Funktransceiver 2.3, 2.4 sind im gezeigten Beispiel als zwei Chips ausgestaltet. Chipübergreifend weist das Sende-Empfängerelement 2 eine Empfängereinheit R2 auf, welche die zwei elektronischen Empfängerschaltungen 2.32, 2.42 umfasst. Zudem weist das Sende-Empfängerelement 2 eine Sendeeinheit S2 auf. Diese umfasst die zwei elektronischen Senderschaltungen 2.31, 2.41. Somit sind durch die eine Sendeeinheit S2 sowohl Funksignale mit der ersten Frequenz fI als auch Funksignale mit der zweiten Frequenz fII sendbar. Analog dazu sind durch die Empfängereinheit R2 sowohl Funksignale mit der ersten Frequenz fI als auch Funksignale mit der zweiten Frequenz fII empfangbar.

Weiterhin sind die Funktransceiver 2.3, 2.4 mit einer Antenne 2.1 verbunden, wobei die Antenne 2.1 als elektrisch leitende Struktur auf der Leiterplatte 2.7 ausgestaltet ist.

Ferner umfasst das Sende-Empfängerelement 2 einen Analog-Digital-Wandler 2.9 und eine integrierte Schaltung 2.5, z. B. in Form eines FPGA-Elements, das als CPU fungiert. Alternativ kann im Sende-Empfängerelement 2 auch eine Triggerschaltung ggf. mit einem regelbaren Verstärker zum Einsatz kommen.

Durch ein mehradriges Kabel 2.8 ist das Sende-Empfängerelement 2 zu dessen Energieversorgung am Stromnetz angeschlossenen. Überdies ist das Sende-Empfängerelement 2 über das Kabel 2.8 mit einer Folgeelektronik 5, die z. B. eine Numerischen Steuerung sein kann, mit der betreffenden Werkzeugmaschine elektrisch verbunden. Im Ausführungsbeispiel ist im Übrigen eine bidirektionale Datenbusverbindung zwischen dem Sende-Empfängerelement 2 und der Folgeelektronik 5 eingerichtet.

Zunächst wird der Tastkopf 1 beispielsweise in einer Spindel einer Werkzeugmaschine befestigt und dann eingeschaltet, das heißt von einem batterieschonenden Standby-Zustand in den eigentlichen Messbetrieb-Zustand überführt.

Der Tastkopf 1 ist gemäß dem Ausführungsbeispiel im Standby-Zustand nicht permanent empfangsbereit, sondern beispielsweise nur während bestimmter Zeitfenster, die hier eine Dauer von 10 ms aufweisen. Innerhalb dieser Zeitfenster ist der Funktransceiver 1.34 in der Weise aktiv, dass dieser Funksignale innerhalb eines Zeitfensters mit der ersten Frequenz fI und innerhalb des darauffolgenden Zeitfensters mit der zweiten Frequenz fII empfangen kann. Im nachfolgenden dritten Zeitfenster kann der Funktransceiver 1.34 wieder Funksignale mit der ersten Frequenz fI empfangen usw.. Zwischen den Zeitfenstern ist jeweils eine Pause (beispielsweise 1000 ms) eingerichtet, wobei innerhalb dieser Pausen der Funktransceiver 1.34 inaktiv ist. Im Übrigen ist der Tastkopf im Standby-Zustand so konfiguriert, dass durch diesen initiativ keine Funksignale sendbar sind, sondern nur als Reaktion auf ein empfangenes Signal. Das Funksignal mit der Einschaltinformation wird wechselweise, z. B. im Abstand von 2 ms, von der ersten elektronischen Senderschaltung 2.31 und von der zweiten elektronischen Senderschaltung 2.41 des Sende-Empfängerelements 2 mit den unterschiedlichen Frequenzen fI und fII abgesetzt. Das Funksignal mit der Einschaltinformation kann z. B. vom Funktransceiver 1.34 empfangen werden, insbesondere wenn gearde der Absendezeitpunkt in das Zeitfenster der Empfangsbereitschaft des Tastkopfes 1 trifft. Dieser Empfang versetzt letztlich das Tastsystem in den eigentlichen Messbetrieb, in welchem der Tastkopf 1 initiativ Funksignale absetzten kann, während das Sende-Empfängerelement 2 Funksignale nur als Reaktion auf ein empfangenes (Acknowledge-) Signal senden wird. Im Messbetrieb werden beide Funktransceiver 2.3, 2.4 in der Weise aktiviert, dass diese gleichzeitig empfangsbereit sind bzw. horchen.

Im Messbetrieb wird der Tastkopf üblicherweise innerhalb eines Bearbeitungsraumes der Werkzeugmaschine 3 verfahren oder um eine Achse, die orthogonal zur Längsachse Z ausgerichtet ist, geschwenkt. Während des Messbetriebs sind, wie bereits erwähnt, beide Funktransceiver 2.3, 2.4 gleichzeitig empfangsbereit bzw. horchen gleichzeitig. Insbesondere durch die gleichzeitige Empfangsbereitschaft ist es möglich auf eine Synchronisation zwischen den Funktransceiver 1.34 des Tastkopfes 1 und den Funktransceivern 2.3, 2.4 des Sende-Empfängerelements 2 zu verzichten.

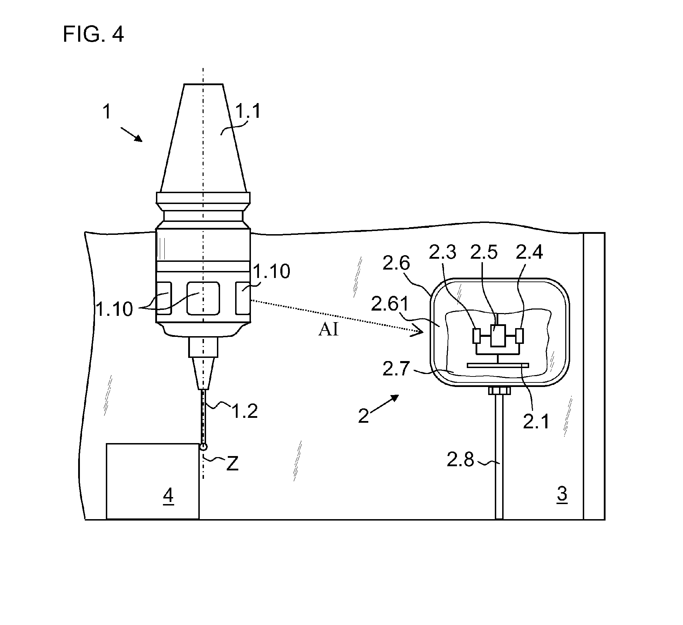

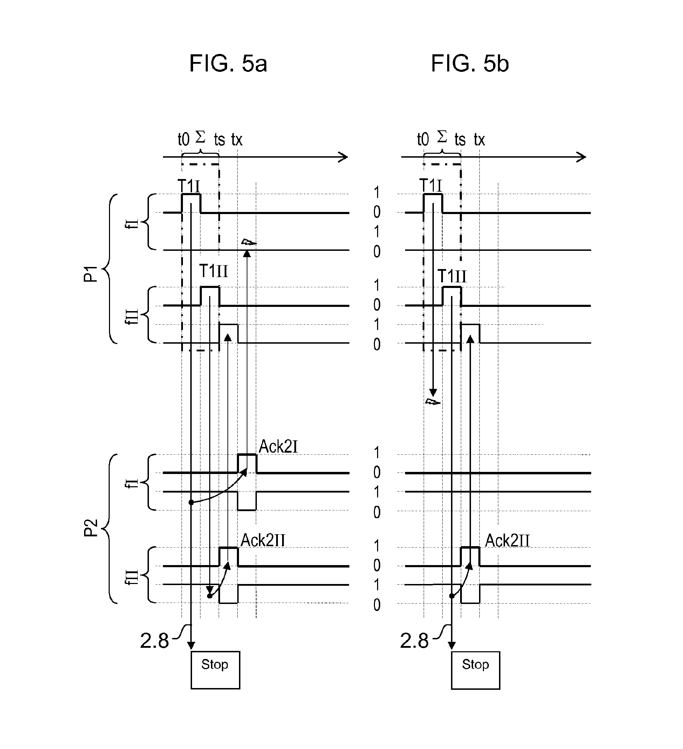

In der Figur 4 ist eine Konstellation dargestellt, in welcher der Taststift 1.2 ein Werkstück 4, welches an einem Aufspanntisch der Werkzeugmaschine 3 befestigt ist, antastet. In dieser Situation wird von den Sensorelementen 1.5 ein elektrisches Sensorsignal E1 erzeugt, das entsprechend eine Antastinformation Al beinhaltet. Das Auftreten des Sensorsignals E1 führt zum Senden eines Lichtsignals und zudem gleichzeitig von mindestens zwei zusätzlichen Funksignalen T1I, T1II innerhalb eines Sendeblocks E (siehe Figuren 5a -d), wobei beide Funksignale T1I, T1II selbstredend ebenfalls die Antastinformation Al beinhalten. Üblicherweise ist bedingt durch die Ausgestaltung der elektronischen Schaltungen das Übertragen der Antastinformation Al durch das Lichtsignal schneller als durch das Funksignal T1I, T1II.

Das Lichtsignal mit der Antastinformation Al wird zum Sende-Empfängerelement 2 gesendet und vom optoelektronischen Empfänger 2.10 empfangen. Dort wird das Lichtsignal in ein elektrisches Signal gewandelt, welches im Analog-Digital-Wandler 2.9 digitalisiert und danach der integrierten Schaltung 2.5 zugeführt wird, so dass dann die Antastinformation Al zur Ausgabe an eine Folgeelektronik 5 über das Kabel 2.8 aufbereitet ist.

Es kann aber auch vorkommen, dass beispielsweise durch Störungen des Lichtsignals, etwa durch ein opakes Hindernis im Weg der Lichtwellen, die Übertragung der Antastinformation Al über das Lichtsignal fehlschlägt. In diesem Fall kann die über zumindest ein Funksignal T1I, T1II übertragene Antastinformation Al einen Maschinenstopp und eine Messung der Tastkopfposition auslösen. Für diesen Fall ist also nochmals eine erhöhte Betriebssicherheit erreicht, weil ein Maschinenstopp der Werkzeugmaschine 3 schon ausgelöst wird, wenn nur eine der beiden Funksignale T1I, T1II mit der Antastinformation Al empfängt. Nachdem ein sicherer Messbetrieb auch ohne die Übertragung von Information via Lichtwellen möglich ist, kann zur Vereinfachung des Tastsystems auch auf diese Übertragungsart verzichtet werden.

Im Folgenden werden Fallkonstellationen gezeigt, bei denen entweder die Übertragung der Antastinformation Al via Lichtwellen fehlgeschlagen ist, oder die Antastinformation Al nur über Funksignal T1I, T1II erfolgt.

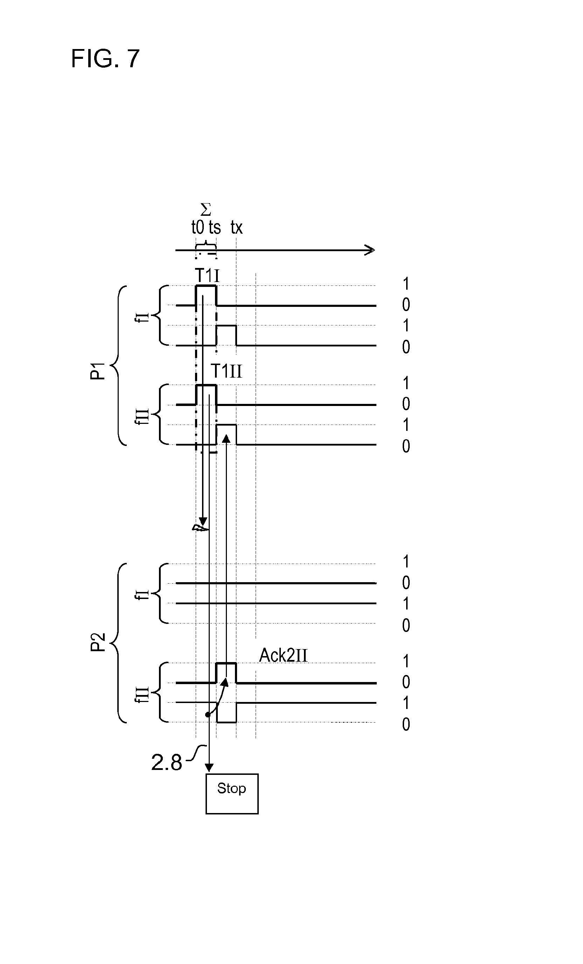

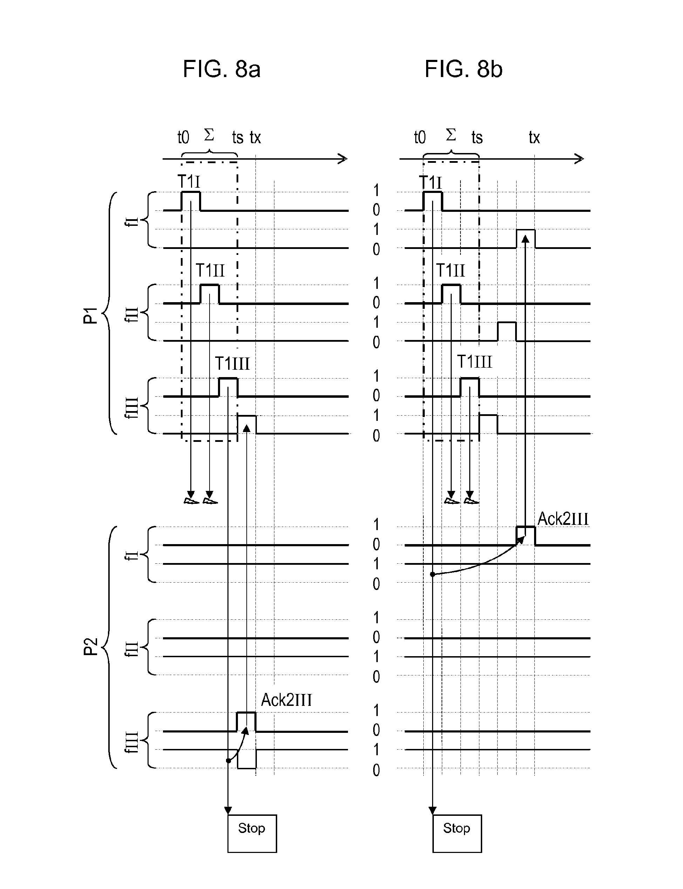

In den Figuren 5a bis 5d, sowie in den Figuren 7, 8a und 8b sind Zeitdiagramme gezeigt zur Erläuterung der Funkübertragungsabläufe, wobei die Zeit von links nach rechts entsprechend den waagrechten Pfeilen aufgetragen ist. Es wird in den Zeitdiagrammen zunächst unterschieden, ob ein Vorgang im Tastkopf 1 abläuft oder im Sende-Empfängerelement 2. Entsprechend sind mit P1 die Vorgänge im Tastkopf 1 und mit P2 die Vorgänge im Sende-Empfängerelement 2 zusammengefasst. Weiterhin wird mit der dicker gedruckten Linie der Sendezustand und mit der vergleichsweise dünnen Linie die Empfangsbereitschaft dargestellt. Liegt die Linie auf dem Niveau 0, so wird nicht gesendet, bzw. liegt keine Empfangsbereitschaft vor. Wenn dagegen die Linie zu einer bestimmten Zeit auf dem Niveau 1 zu liegen kommt, wird gesendet bzw. ist die Empfangsbereitschaft gegeben.

Gemäß der Figur 5a wird nach dem Antasten vom Funktransceiver 1.34 des Tastkopfes 1 zunächst das Funksignal T1I, das die Antastinformation Al beinhaltet, mit der ersten Frequenz fI zum Zeitpunkt t0 abgesetzt. Dieser Vorgang dauert im gezeigten Ausführungsbeispiel 1 ms. Sodann wird die Antastinformation Al vom Funktransceiver 1.34 durch das Funksignal T1II mit der zweiten Frequenz fII gesendet (zum Zeitpunkt t0 + 1 ms). Demnach ist also der Tastkopf 1 derart konfiguriert, dass vom Tastkopf 1 die Information Al innerhalb eines Sendeblocks E sendbar ist, wobei sich der Sendeblock E über einen Zeitraum von t0 bis ts erstreckt, also im vorgestellten Ausführungsbeispiel gemäß den Figuren 5a bis 5d über 2 ms. Innerhalb dieser 2 ms können durch die Empfängereinheit R1 des Tastkopfs 1 weder Funksignale mit der ersten Frequenz fI noch Funksignale mit der zweiten Frequenz fII empfangen werden. Sobald jedoch das Funksignal T1II vollständig abgesetzt wurde (ca. bei t0 + 2 ms bzw. nach dem Ende des Sendeblocks E) wird der Funktransceiver 1.34 des Tastkopfes 1 so geschaltet, dass dessen elektronische Empfängerschaltung 1.342 empfangsbereit wird für Funksignale, welche die zweite Frequenz fII aufweisen.

Im ersten Fall gemäß der Figur 5a wird das Funksignal T1I mit der ersten Frequenz fI problemlos vom Sende-Empfängerelement 2 empfangen. Beide Funktransceiver 2.3, 2.4 des Sende-Empfängerelements 2 sind im gezeigten Ausführungsbeispiel im Messbetrieb stets gleichzeitig empfangsbereit, sofern die Senderschaltungen 2.41, 2.42 nicht aktiv sind, also das Sende-Empfängerelement 2 gerade nicht sendet. Jedenfalls wird beispielsgemäß das Funksignal T1I von der Empfängerschaltung 2.31 problemlos empfangen.

Die Antastinformation Al wird anschließend einerseits umgehend an die Folgeelektronik 5 übertragen. Dann wird die Position bestimmt, an welcher die Berührung des Werkstücks 4 erfolgt ist und die Folgeelektronik 5 löst gleichzeitig einen Stopp der Werkzeugmaschine aus, so dass der Tastkopf 1 relativ zum Werkstück 4 nicht mehr bewegt wird. Üblicherweise verfügen Werkzeugmaschinen 3 über genaue Messeinrichtungen, welche die Spindelposition bestimmen, so dass diese Messwerte für die Bestimmung der Berührposition verwendet werden.

Andererseits wird von der integrierten Schaltung 2.5 die elektronischen Senderschaltung 2.31 veranlasst mit einer Verzögerung von etwa 3 ms ein Acknowledge-Signal Ack2I mit der ersten Frequenz fI zu senden.

Im gezeigten Beispiel wird das Funksignal T1II mit der zweiten Frequenz fII, das die Antastinformation Al beinhaltet, auch vom Sende-Empfängerelement 2, nämlich durch die elektronische Empfängerschaltung 2.42 empfangen. Dieser Empfang bewirkt, dass die integrierte Schaltung 2.5 die Senderschaltung 2.32 veranlasst, ein Acknowledge-Signal Ack2II mit der zweiten Frequenz fII unverzüglich zu senden. Da zu dieser Zeit die elektronische Empfängerschaltung 1.342 des Tastkopfes 1 empfangsbereit ist und das Acknowledge-Signal Ack2II nicht gestört wurde, wird dieses vom Tastkopf 1 empfangen. Dieser Empfang löst zum Zeitpunkt tx das Abschalten der Empfängereinheit R1 des Tastkopfes 1 aus, sodass der Stromverbrauch des Tastkopfes 1 wieder reduziert ist. Das Acknowledge-Signal Ack2I wird vom Tastkopf 1 nicht mehr empfangen.

Wie bereits oben erwähnt, wird der Bearbeitungsraum durch metallische Wände begrenzt, so dass Funksignale T1I, T1II, Ack2I, Ack2II welche vom Tastkopf 1 oder vom Sende-Empfängerelement 2 abgesetzt worden sind, von den Wänden reflektiert werden. Durch Interferenzeffekte ist es nun möglich, dass es zu lokalen Auslöschungen der Funkwellen (Funklöcher) kommt, so dass dort die Funksignale T1I, T1II, Ack2I, Ack2II nicht empfangen werden. Ebenso kann durch Störungen anderer Funkquellen eine Übertragung an bestimmten Orten behindert werden.

In der Figur 5b ist ein Fall dargestellt, bei dem die Übertragung des Funksignals T1I, das die Antastinformation Al beinhaltet, mit der ersten Frequenz fI fehlschlägt, und das darauffolgend gesendete Funksignal T1II mit der zweiten Frequenz fII erfolgreich verläuft. Dies hat zur Folge, dass der Maschinenstopp nur um ca. 1 ms gegenüber dem Fall gemäß Figur 5a verzögert erfolgt, während die Einschaltzeit tx - t0 des Funktransceivers 1.34 unverändert mit ca. 3 ms bleibt. Bedingt durch den gewählten Abstand (hier 0,485 GHz) zwischen den Frequenzen fI und fII ist es im Übrigen extrem unwahrscheinlich, dass der Tastkopf 1 auch bezogen auf die zweite Frequenz fII in einem Funkloch positioniert ist.

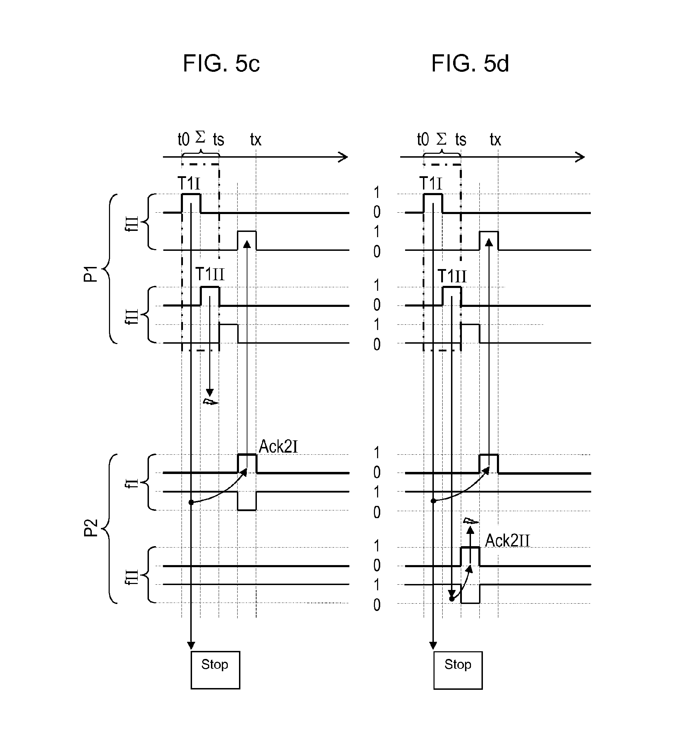

In der Figur 5c ist ein Fall gezeigt, bei dem die Übertragung des Funksignals T1I mit der ersten Frequenz fI erfolgreich verläuft und das darauffolgend gesendete Funksignal T1II mit der zweiten Frequenz fII nicht empfangen wird. Im Ergebnis wird dadurch die Einschaltzeit tx - t0 des Funktransceivers 1.34 im Vergleich zur Konstellation gegenüber dem Fall gemäß der Figur 5a verlängert, während der Maschinenstopp zu gleichen Zeit erfolgt.

Der Fall gemäß der Figur 5d zeigt, dass auch bei Störung eines der Funksignale Ack2I, Ack2II mit der Acknowledge-Information, z. B. bei einem Fehlschlagen der Übertragung des Funksignals Ack2II, eine vergleichsweise kurze Auslösezeit für den Maschinenstopp und zudem eine kurze Einschaltzeit tx - t0 des Funktransceivers 1.34 sichergestellt ist.

Sollte nach dem Senden der Funksignale T1I, T1II kein Funksignal Ack2I, Ack2II mit der Acknowledge-Information vom Tastkopf 1 empfangen werden, so wird die gleiche Sequenz, erforderlichenfalls mehrfach, wiederholt, wobei die Sequenz folgende Schritte umfasst:
A1. Senden des Funksignals T1I mit der ersten Frequenz fI,
A2. Senden des Funksignals T1II mit der zweiten Frequenz fII,
B1. Herstellen der Empfangsbereitschaft des Funktransceivers 1.34 für die zweite Frequenz fII und ggf.
B2. Herstellen der Empfangsbereitschaft des Funktransceivers 1.34 für die erste Frequenz fI;

Die Verfahrensschritte A1 und A2 werden innerhalb des Sendeblocks E durchgeführt, erst danach sind Funksignale mit der ersten oder zweiten Frequenz fI, fII vom Tastkopf 1 empfangbar, gemäß den Verfahrensschritten B1, B2.

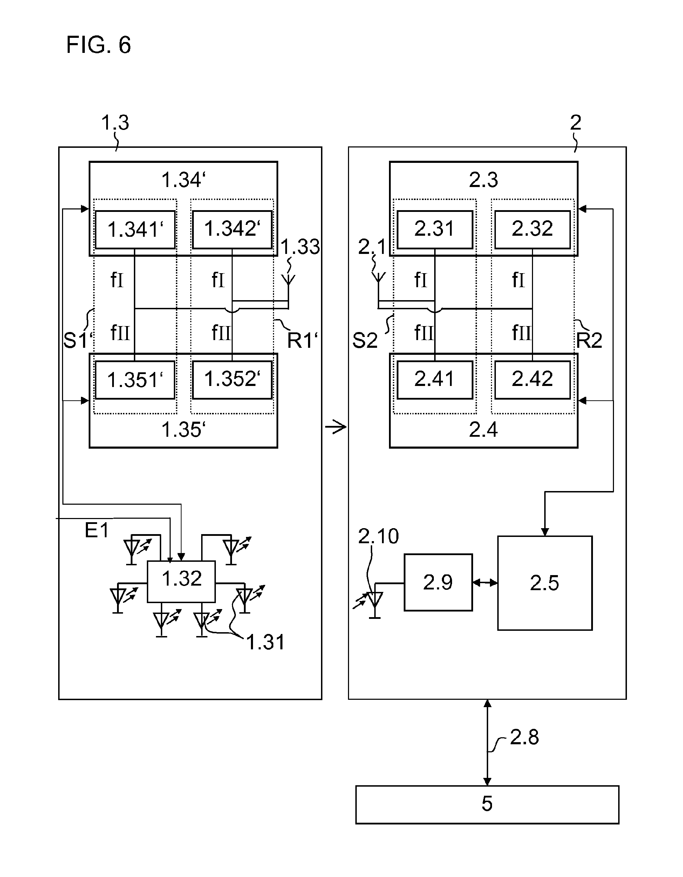

In der Figur 6 ist ein zweites Ausführungsbeispiel dargestellt. Im Unterschied zum ersten Ausführungsbeispiel umfasst die Sende- und Empfängerbaugruppe 1.3 des Tastkopfes 1 nun einen zusätzlichen Funktransceiver 1.35'. Dieser weist eine elektronische Senderschaltung 1.351' und eine elektronische Empfängerschaltung 1.352' auf. Der Funktransceiver 1.35' ist so ausgestaltet, dass dieser Funksignale T1II mit einer zweiten Frequenz fII, im vorgestellten Ausführungsbeispiel beträgt fII = 2,485 GHz senden oder empfangen kann. Der andere Funktransceiver 1.34' kann Funksignale T1I mit einer ertsen Frequenz fI (fI = 2,4 GHz) senden oder empfangen. Beide Funktransceiver 1.34', 1.35' sind jeweils als ein einzelner Chip ausgestaltet und mit der Antenne 1.33 verbunden.

Der Tastkopf 1 weist nun eine Empfängereinheit R1' auf, welche die elektronische Empfängerschaltungen 1.342', 1.352' umfasst. Zudem weist der Tastkopf 1 eine Sendeeinheit S1' auf, welche die elektronischen Senderschaltungen 1.341', 1.351' umfasst.

Im Messbetrieb des Tastkopfes 1 werden von beiden Funktransceivern 1.34', 1.35' Funksignale T1I, T1II mit der ersten Frequenz fI und der zweiten Frequenz fII parallel bzw. gleichzeitig abgesetzt, wobei die Funksignale T1I, T1II die Antastinformation Al beinhalten. Die Antastinformation Al kann also via Funksignale T1I, T1II zweifach zum Sende-Empfängerelement 2 übertragen werden. Die Funksignale T1I, T1II werden von den Funktransceivern 2.3, 2.4, insbesondere von den Empfängerschaltungen 2.32, 2.42 empfangen. Eine Übertragung der Antastinformation Al über Funk ist bereits dann erfolgreich, wenn nur eines der Funksignale T1I, T1II, entweder mit der ersten Frequenz fI oder mit der zweiten Frequenz fII vom Funktransceiver 2.3 oder vom Funktransceiver 2.4 empfangen wurde.

In der Figur 7 ist ein Beispiel für eine derartige Übertragung von Funksignalen T1I, T1II gemäß dem zweiten Ausführungsbeispiel gezeigt. Mit einer Antastung zum Zeitpunkt t0 werden beide Funktransceiver unmittelbar und gleichzeitig veranlasst die Antastinformation Al durch Funksignale T1I, T1II mit der ersten Frequenz fI bzw. mit der zweiten Frequenz fII zu senden. Somit weist der Sendeblock E eine zeitliche Länge von nur 1 ms auf.

Im Fall gemäß der Figur 7 schlägt die Übertragung des Funksignals T1I mit der ersten Frequenz fI fehl, während das gleichzeitig gesendete Funksignal T1II mit der zweiten Frequenz fII von der Empfängerschaltung 2.42 empfangen wird. Dies löst im Sende-Empfängerelement 2 das Absetzen des Acknowledge-Signals Ack2II durch die zweite elektronische Senderschaltung 2.41 mit der zweiten Frequenz fII aus. Weiterhin wird durch den Empfang des Funksignals T1II ein Maschinenstopp in kürzester Zeit bewirkt.

Nachdem das Acknowledge-Signal Ack2II durch die elektronische Empfängerschaltungen 1.352' des zweiten Funktransceivers 1.35' vom Tastkopf 1 empfangen wurde, wird die Empfangsbereitschaft des Tastkopfes 1 abgeschaltet, so das also die Funktransceiver 1.34', 1.35' des Tastkopfs 1 nur während der kurzen Einschaltzeit tx - t0 aktiv waren.

In den Figuren 8a und 8b ist ein drittes Ausführungsbeispiel gezeigt, bei dem die Antastinformation Al durch ein erstes, zweites und drittes Funksignal T1I, T1II, T1III übertragbar ist. Der Tastkopf 1 kann dabei so ausgestaltet sein, dass dieser zur Reduzierung des Aufwandes für die Hardware die Funksignale T1I, T1II, T1III nacheinander sendet. Entsprechend kann hier eine Sendeeinheit verwendet werden, die es erlaubt nacheinander Funksignale T1I, T1II, T1III mit drei verschiedenen Frequenzen fI, fII, fIII zu senden. Auf Seiten des Sende-Empfängerelements 2 sind dann drei Funktransceiver vorgesehen. Folglich ist im Ausführungsbeispiel gemäß den Figuren 8a, 8b der Sendeblock E 3 ms lang. Innerhalb dieses Zeitraums sind weder Funksignale mit der ersten Frequenz fI noch Funksignale mit der zweiten Frequenz fII noch Funksignale mit der dritten Frequenz fIII durch die Empfängereinheit des Tastkopfs 1 empfangbar.

Nach dem Abtasten werden in diesem Ausführungsbeispiel zunächst stets folgende Schritte nacheinander durchgeführt:
A1. Senden des Funksignals T1I mit der ersten Frequenz fI,
A2. Senden des Funksignals T1II mit der zweiten Frequenz fII,
A3. Senden des Funksignals T1III mit der dritten Frequenz fIII,
B1. Herstellen der Empfangsbereitschaft für die dritte Frequenz fIII; Sollte nach dem Senden der Funksignale T1I, T1II, T1III das Acknowledge-Signal Ack2III mit der dritten Frequenz fIII vom Tastkopf 1 nicht empfangen werden, dann folgt das
B2. Herstellen der Empfangsbereitschaft für die erste bzw. zweite Frequenz fI, fII; Sollte danach auch das Acknowledge-Signal Ack2I mit der ersten Frequenz fI bzw. das Acknowledge-Signal Ack2II mit der zweiten Frequenz fII vom Tastkopf 1 nicht empfangen werden, dann folgt das
B3. Herstellen der Empfangsbereitschaft für die verbleibende zweite bzw. erste Frequenz fI, fII;

Die Verfahrensschritte A1, A2 und A3 werden innerhalb des Sendeblocks E durchgeführt, erst danach sind Funksignale mit der ersten, zweiten oder dritten Frequenz fI, fII, fIII vom Tastkopf 1 empfangbar, gemäß den Verfahrensschritten B1, B2 und B3.

Sofern nach Abfolge dieser Schritte immer noch keine Übertragung erfolgt ist, wird dieselbe Sequenz ggf. mehrmals wiederholt.

In der Figur 8a ist ein Fall gezeigt, bei dem die Übertragung der Antastinformation Al durch die beiden Funksignale T1I, T1II fehlschlägt, während das Funksignal T1III mit der dritten Frequenz fI übertragen wird. Trotz der beiden Fehlschläge wird der Maschinenstopp mit vergleichsweise kurzer Verzögerung ausgelöst. Nach dem Empfang des Acknowledge-Signals Ack2III mit der dritten Frequenz fIII wird die Empfangsbereitschaft des Tastkopfs 1 abgestellt.

Dagegen wird im Fall nach Figur 8b eine unverzügliche Auslösung des Maschinenstopps bewirkt, wenn alleine das erste Funksignal T1I mit der ersten Frequenz fI vom Sende-Empfängerelements 2 empfangen wird.

Außer der Antastinformation Al wird vom Tastkopf 1 im Messbetrieb laufend eine Bereitschaftsinformation BI innerhalb eines Sendeblocks E, in dem wiederum zwei Funksignale T1I, T1II, mit zwei unterschiedlichen Frequenzen fI fII gesendet werden, übertragen. Die Übertragung der Bereitschaftsinformation BI erfolgt also analog zur Übertragung der Antastinformation Al.

## Patentansprüche

1. Tastsystem, umfassend einen Tastkopf (1) und ein Sende-Empfängerelement (2), wobei
der Tastkopf (1) einen Taststift (1.2) und ein Sensorelement (1.5)
aufweist und durch Berührung des Taststifts (1.2) vom Sensorelement (1.5) ein Sensorsignal (E1) erzeugbar ist,
der Tastkopf (1) und das Sende-Empfängerelement (2) jeweils eine
Sendeeinheit (S1, S1'; S2) und jeweils eine Empfängereinheit (R1, R1'; R2) aufweisen, so dass zwischen diesen eine Information (AI, BI) drahtlos übertragbar ist,
der Tastkopf (1) weiterhin derart konfiguriert ist, dass vom Tastkopf (1) die Information (AI, BI) innerhalb eines Sendeblocks (E) sendbar ist, wobei
- innerhalb des Sendeblocks (E) ein erstes Funksignal (T1I) mit einer ersten Frequenz (fI) und ein zweites Funksignal (T1II) mit einer von der ersten Frequenz (fI) unterschiedlichen zweiten Frequenz (fII) sendbar sind, und
- weder Funksignale mit der ersten Frequenz (fI) noch Funksignale mit der zweiten Frequenz (fII) durch die Empfängereinheit (R1, R1') des Tastkopfs (1) innerhalb des Sendeblocks (E) empfangbar sind.

2. Tastsystem gemäß dem Anspruch 1, wobei das Sende-Empfängerelement (2) eine erste elektronische Empfängerschaltung (2.32) und eine zweite elektronische Empfängerschaltung (2.42) aufweist, wobei durch die erste elektronische Empfängerschaltung (2.32) das erste Funksignal (T1I) mit der ersten Frequenz (fI) und durch die zweite elektronische Empfängerschaltung (2.42) das zweite Funksignal (T1II) mit der zweiten Frequenz (fII) empfangbar sind.

3. Tastsystem gemäß dem Anspruch 2, wobei das erste Funksignal (T1I) und das zweite Funksignal (T1II) gleichzeitig empfangbar sind.

4. Tastsystem gemäß einem der vorhergehenden Ansprüche, wobei die Sendeeinheit (S1) des Tastkopfs (1) eine elektronische Sendeschaltung (1.341) aufweist, die so konfiguriert ist, dass durch diese sowohl das erste Funksignal (T1I) mit der ersten Frequenz (fI) als auch das zweite Funksignal (T1II) mit der zweiten Frequenz (fII) sendbar sind.

5. Tastsystem gemäß einem der vorhergehenden Ansprüche, wobei die Sendeeinheit (S1') des Tastkopfs (1) zwei elektronische Sendeschaltungen (1.341',1.351') aufweist, wobei durch die erste elektronische Sendeschaltung (1.341') das erste Funksignal (T1I) mit der ersten Frequenz (fI) und durch die zweite elektronische Sendeschaltung (1.351') das zweite Funksignal (T1II) mit der zweiten Frequenz (fII) sendbar sind.

6. Tastsystem gemäß dem Anspruch 5, wobei das erste Funksignal (T1I) und das zweite Funksignal (T1II) gleichzeitig sendbar sind.

7. Tastsystem gemäß einem der vorhergehenden Ansprüche, wobei die Information (AI) als eine Antastinformation ausgestaltet ist.

8. Tastsystem gemäß einem der vorhergehenden Ansprüche, wobei die Information (AI, BI) unsynchronisiert übertragbar ist.

9. Verfahren zum Betrieb eines Tastsystems, umfassend einen Tastkopf (1) und ein Sende-Empfängerelement (2), wobei der Tastkopf (1) einen Taststift (1.2) und ein Sensorelement (1.5)
aufweist und durch Berührung des Taststifts (1.2) vom Sensorelement (1.5) ein Sensorsignal (E1) erzeugt wird,
der Tastkopf (1) und das Sende-Empfängerelement (2) jeweils eine
Sendeeinheit (S1, S1'; S2) und jeweils eine Empfängereinheit (R1, R1'; R2) aufweisen, so dass zwischen diesen eine Information (AI, BI) drahtlos übertragen wird, weiterhin vom Tastkopf (1) die Information (AI, BI) innerhalb eines Sendeblocks (E) gesendet wird, wobei
- innerhalb des Sendeblocks (E) ein erstes Funksignal (T1I) mit einer ersten Frequenz (fI) und ein zweites Funksignal (T1II) mit einer von der ersten Frequenz (fI) unterschiedlichen zweiten Frequenz (fII) gesendet werden, und
- weder Funksignale mit der ersten Frequenz (fI) noch Funksignale mit der zweiten Frequenz (fII) durch die Empfängereinheit (R1, R1') des Tastkopfs (1) innerhalb des Sendeblocks (E) empfangbar sind.

10. Verfahren zum Betrieb eines Tastsystems gemäß dem Anspruch 9, wobei das erste Funksignal (T1I) und das zweite Funksignal (T1II) innerhalb eines Sendeblocks (E) gleichzeitig von der Empfängereinheit (R2) des Sende-Empfängerelements (2) empfangbar sind.

11. Verfahren zum Betrieb eines Tastsystems gemäß dem Anspruch 9 oder 10, wobei die Information (AI, BI) als eine Bereitschaftsinformation oder Antastinformation ausgestaltet ist.

12. Verfahren zum Betrieb eines Tastsystems gemäß einem der Ansprüche 9, bis 11 wobei
vom Tastkopf (1) die Information (AI, BI) innerhalb des Sendeblocks (E) zunächst über das erste Funksignal (T1I) mit der ersten Frequenz (fI) und danach über das zweite Funksignal (T1II) mit der zweiten Frequenz (fII) gesendet wird,
nach dem Empfang des ersten und des zweiten Funksignals (T1I,
T1II) durch die Empfängereinheit (R2) des Sende-Empfängerelements (2) die Sendeeinheit (S2) des Sende-Empfängerelements (2) ein Funksignal (Ack2II) mit der zweiten Frequenz (fII) sendet.

13. Verfahren zum Betrieb eines Tastsystems gemäß dem Anspruch 12, wobei nach dem Empfang des ersten und des zweiten Funksignals (T1I, T1II) die Sendeeinheit (S2) des Sende-Empfängerelements (2) zunächst das Funksignal (Ack2II) mit der zweiten Frequenz (fII) und danach das Funksignal (Ack2I) mit der ersten Frequenz (fI) sendet.

14. Verfahren zum Betrieb eines Tastsystems gemäß einem der Ansprüche 9 bis 11, wobei das erste Funksignal (T1I) und das zweite Funksignal (T1II) von der Sendeeinheit (S1') des Tastkopfes (1) gleichzeitig gesendet werden.

15. Verfahren zum Betrieb eines Tastsystems gemäß einem der Ansprüche 9 bis 14, wobei die Information (AI, BI) unsynchronisiert übertragen wird.
